(19) Europäisches Patentamt
European Patent Office
Office européen des brevets

(11) **EP 4 102 630 A1**

(12) **EUROPEAN PATENT APPLICATION**
published in accordance with Art. 153(4) EPC

(43) Date of publication:
**14.12.2022 Bulletin 2022/50**

(51) International Patent Classification (IPC):
**H01M 50/207** $^{(2021.01)}$

(21) Application number: **21757581.0**

(22) Date of filing: **07.02.2021**

(52) Cooperative Patent Classification (CPC):
**H01M 4/13; H01M 10/0585; H01M 10/0587;
H01M 10/625; H01M 10/658; H01M 50/103;
H01M 50/131; H01M 50/207; H01M 50/244;
H01M 50/249;** Y02E 60/10; Y02P 70/50

(86) International application number:
**PCT/CN2021/075786**

(87) International publication number:
**WO 2021/164594 (26.08.2021 Gazette 2021/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.02.2020 CN 202010108866**

(71) Applicant: **BYD Company Limited
Shenzhen, Guangdong 518118 (CN)**

(72) Inventors:
• **YUAN, Wansong
Shenzhen, Guangdong 518118 (CN)**
• **YAN, Haipeng
Shenzhen, Guangdong 518118 (CN)**
• **JIANG, Xi
Shenzhen, Guangdong 518118 (CN)**
• **ZOU, Xiangda
Shenzhen, Guangdong 518118 (CN)**
• **ZHU, Yan
Shenzhen, Guangdong 518118 (CN)**

(74) Representative: **Hoffmann Eitle
Patent- und Rechtsanwälte PartmbB
Arabellastraße 30
81925 München (DE)**

(54) **BATTERY SEQUENCE, BATTERY PACK AND VEHICLE**

(57) A cell array (20), including a plurality of cells (10) arranged in sequence is provided. Each of the plurality of cells (10) includes a housing (100) and an electrode core (201). The electrode core (201) includes an electrode plate. The electrode plate includes a current collector and a coating layer arranged on the current collector. The cell array (20) satisfies the following formula 1: $(1 - JR_w) + (SR_w - 1) = 10\%\text{-}15\%$. $JR_w$ is an expansion space for the electrode core (201) inside each of the plurality of cells (10) in a first direction, $SR_w$ is an expansion space outside the plurality of cells (10) in the first direction, and a thickness direction of each of the plurality of cells (10) is defined as the first direction. $JR_w = P_w/(Cell_w - K_w - Cw)$. $SR_w = (M_w - MN_w)/(Cell_n \times Cell_w)$.

FIG. 1

EP 4 102 630 A1

**Description**

## CROSS-REFERENCE TO RELATED APPLICATIONS

The present disclosure claims priority to and benefits of Chinese Patent Application No. 202010108866.X, entitled "CELL ARRAY, BATTERY PACK, AND VEHICLE" and filed by BYD Company Limited on February 21, 2020.

## FIELD

The present disclosure relates to the technical field of batteries, and more specifically, to a cell array, a battery pack, and a vehicle.

## BACKGROUND

The progressive popularization of new energy vehicles is posing higher requirements on power batteries for use in the new energy vehicles. Housings of existing batteries are mostly square aluminum housings. To ensure the cycle performance of a battery with a square aluminum housing and facilitate assembly into the housing without scratching the separator, generally a certain assembly gap is provided between the electrode core and the aluminum housing. However, an excessively large gap not only leads to low space utilization and a waste of the battery capacity, but also results in undesirable movement of the electrode core in the battery. In addition, gas produced during charging and discharging leads to a poor interface state, and lithium ions cannot diffuse through the poor interface to precipitate, affecting the safety and service life of the battery.

## SUMMARY

The present disclosure aims to resolve at least one of the technical problems existing in the related art. Therefore, the present disclosure provides a cell array. The cell array is arranged more properly, which can improve the electrode plate interface and the electrode core performance while controlling the expansion gap.

A cell array is provided, including a plurality of cells arranged in sequence. Each of the plurality cells includes a housing and an electrode core arranged in the housing. The electrode core includes an electrode plate. The electrode plate includes a current collector and a coating layer arranged on the current collector. The cell array satisfies the following formula 1:

$$(1 - JR_w) + (SR_w - 1) = 10\%\text{-}15\% \text{ (formula 1)}.$$

$JR_w$ is an expansion space for the electrode core inside each of the plurality of cells in a first direction, $SR_w$ is an expansion space outside the plurality of cells in the first direction, and a thickness direction of each of the plurality of cells is defined as the first direction.

$JR_w = P_w/(Cell_w - K_w - Cw)$. $P_w$ is a total thickness of all of coating layers in the first direction at any moment, and the total thickness of the coating layers at any moment is a total thickness of the coating layers in the first direction at any moment before expansion, during expansion, or after expansion, $Cell_w$ is a thickness of each of the plurality of cells in the first direction before use, $K_w$ is a wall thickness of the housing in the first direction, and $C_w$ is an incompressible thickness in the electrode core in the first direction. $SR_w = (M_w - MN_w)/(Cell_n \times Cell_w)$. $M_w$ is a thickness of the cell array in the first direction, $MN_w$ is an incompressible thickness in the cell array in the first direction, and $Cell_n$ is a number of the cells.

Therefore, $JR_w$ and $SR_w$ can be adjusted and controlled to allow a cell array 20 to satisfy the formula 1, which can control the expansion gap and improve the electrode plate interface and the electrode core performance.

A battery pack is provided, including a plurality of the cell arrays according to any one of the foregoing.

A vehicle is provided, including the foregoing battery pack.

Additional aspects and advantages of the present disclosure are partially given in the following description, and partially become apparent in the following description or may be learned through the practice of the present disclosure.

## BRIEF DESCRIPTION OF THE DRAWINGS

The foregoing and/or additional aspects and advantages of the present disclosure will become apparent and comprehensible in the embodiment description made with reference to the following accompanying drawings.

FIG. 1 is a schematic structural diagram of a cell array according to an embodiment of the present disclosure;

FIG. 2 is a schematic structural diagram of a cell according to an embodiment of the present disclosure;

FIG. 3 is a schematic three-dimensional diagram of a cell array according to an embodiment of the present disclosure;

FIG. 4 is a schematic three-dimensional diagram of a cell array according to an embodiment of the present disclosure;

FIG. 5 is a cross-sectional view of a schematic structural diagram of a cell according to an embodiment of the present disclosure;

FIG. 6 is a schematic three-dimensional diagram of a cell according to an embodiment of the present disclosure;

FIG. 7 is a schematic diagram of a battery pack according to an embodiment of the present disclosure; and

FIG. 8 is a schematic diagram of a vehicle according to an embodiment of the present disclosure.

## DETAILED DESCRIPTION

Embodiments of the present disclosure are described in detail below, and examples of the embodiments are shown in the accompanying drawings, where the same or similar elements or the elements having same or similar functions are denoted by the same or similar reference numerals throughout the description. The embodiments described below with reference to the accompanying drawings are exemplary and used only for explaining the present disclosure, and should not be construed as a limitation on the present disclosure.

In the description of the present disclosure, it should be understood that a direction or location relationship indicated by a term "center", "on", "under", "front", "rear", "left", "right", "vertical", "horizontal", "top", "bottom", "inner", "outer", or the like is a direction or location relationship shown based on the accompanying drawings, and is intended only to conveniently describe the present disclosure and simplify the description, but is not intended to indicate or imply that a mentioned apparatus or element needs to have a particular direction and is constructed and operated in the particular direction. Therefore, the direction or location relationship cannot be understood as a limitation on the present disclosure.

It is to be noted that, the terms "first" and "second" are used for descriptive purposes only and should not be construed as indicating or implying relative importance or implicitly indicating the number of technical features indicated. Therefore, a feature defined by "first" or "second" can explicitly or implicitly include one or more features. Further, in the description of the present disclosure, unless otherwise stated, "a plurality of" means two or more than two.

There are two types of changes in cell thickness: reversible and irreversible. The reversible changes include thermal expansion and volume change caused by lithium deintercalation, where an original thickness can be restored under the same SOC. The foregoing process will not cause irreversible damage to the cell. Constrained by structural members, coating layers in a positive electrode and a negative electrode of a charged cell will expand, and an electrolyte solution will be discharged from a porous structure (such as a porous electrode or a separator) in an electrode core. As charging progresses, the amount of residual electrolyte solution increases, and reaches the highest level at the end of charging. In this case, the electrode core expands to the greatest extent in a thickness direction, and correspondingly, the cell receives the maximum expansion force. During discharging, the electrolyte solution is absorbed back into the porous structure. This process can be understood as a breathing effect of charging and discharging of the cell. The reversible expansion of the cell usually reflects the characteristics of positive and negative electrode materials, so an expansion ratio can be reduced by optimizing a material system.

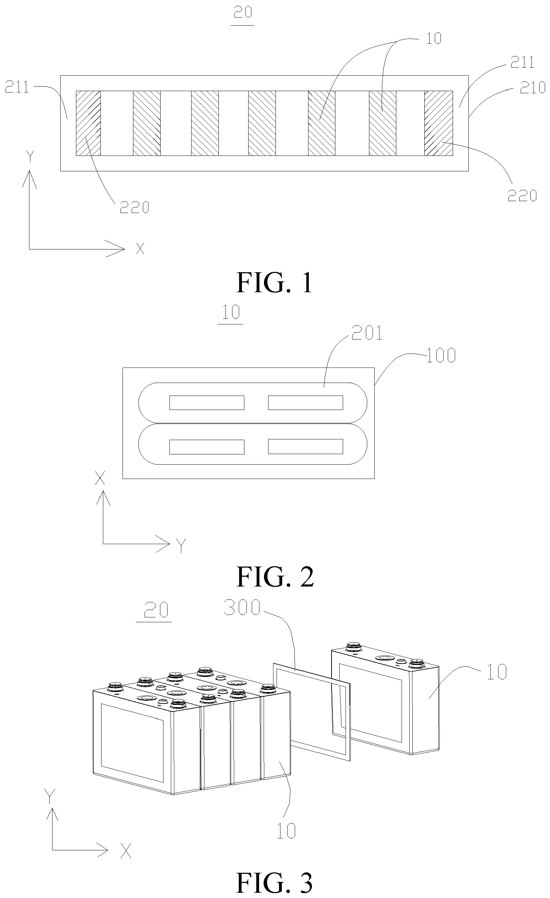

Referring to FIG. 1 and FIG. 2, an embodiment of the present disclosure provides a cell array 20. The cell array 20 includes a plurality of cells 10 arranged in sequence. Each of the plurality of cells 10 includes a housing 100 and an electrode core 201 arranged in the housing 100. The electrode core 201 includes an electrode plate. The electrode plate includes a current collector and a coating layer arranged on the current collector. The coating layer includes an active material, and the coating layer is expandable or contractible during charging and discharging of the cell.

The cell array 20 satisfies the following formula 1:

$$(1 - JR_w) + (SR_w - 1) = 10\%\text{-}15\% \text{ (formula 1)}.$$

$JR_w$ is an expansion space for the electrode core 201 inside each of the plurality of cells 10 in a first direction X, $SR_w$ is an expansion space outside the plurality of cells 10 in the first direction X, and a thickness direction of each of the plurality of cells is defined as the first direction X.

$$JR_w = P_w/(Cell_w - K_w - C_w).$$

$P_w$ is a total thickness of all of coating layers in the first direction X at any moment. The total thickness of the coating layers at any moment is a total thickness of the coating layers in the first direction at any moment before expansion, during expansion, or after expansion. The electrode core 201 is usually obtained by stacking multiple layers of electrode plates or winding long electrode plates at intervals. The electrode plate usually includes a positive electrode plate and a negative electrode plate, so the electrode core 201 is obtained by stacking a positive electrode plate, a separator, and a negative electrode plate or winding a positive electrode plate, a separator, and a negative electrode plate. The positive electrode plate includes a positive current collector and a positive coating layer arranged on the positive current collector. The positive coating layer may be single-layer coating or double-layer coating. The negative electrode plate includes a negative current collector and a negative coating layer arranged on the negative current collector. The negative coating layer may be single-layer coating or double-layer coating. Therefore, a total thickness of the coating layer is a thickness of the positive coating layer plus a thickness of the negative coating layer (where the coating layer is single-layer coating) or is twice a thickness of the positive coating layer plus twice a thickness of the negative coating layer (where the coating layer is double-layer coating). If necessary, the electrode core 201 also includes an electrical insulation paper for outside covering.

$Cell_w$ is a thickness of each of the plurality of cells 10 in the first direction X before use. That is, $Cell_w$ may be a thickness of the housing 100 of the cell 10 when feeding, or may be a thickness of the housing 100 of the cell 10 before assembly, or may be a thickness of the housing 100 neither expanded nor contracted after assembly.

$K_w$ is a wall thickness of the housing 100 in the first direction X (that is, a total thickness measured of side plates of the housing 100 in the first direction, where there may be two or more side plates). $C_w$ is an incompressible thickness in the electrode core 201 in the first direction X. Further, the incompressible thickness in the electrode core 201 includes thicknesses of a separator and a current collector in the electrode core 201, or the incompressible thickness in the electrode core 201 includes thicknesses of a separator, a current collector, and an electrical insulation paper. In some embodiments, the incompressible thickness in the electrode core 201 also includes a thickness of a space occupied by compressed gas in the electrode core 201 in the first direction. The gas produced in each of the plurality of cells in use will accumulate in the housing 100 to provide a certain thickness. Therefore, in this embodiment, the incompressible thickness includes a thickness of the compressed gas.

$$SR_w = (M_w - MN_w)/(Cell_n \times Cell_w).$$

$M_w$ is a thickness of the cell array 20 in the first direction X, $MN_w$ is an incompressible thickness in the cell array 20 in the first direction X, and $Cell_n$ is a number of the cells 10. In this embodiment, an outer case 210 is arranged outside the cell array 20 and includes end plates 211 at two sides in the first direction X; and an incompressible thermal insulation cotton 220 is further provided between the outer case 210 and the cell array 20. In this embodiment, the incompressible thickness in the cell array 20 includes thicknesses of the end plates 211 and the incompressible thermal insulation cotton 220. $M_w$ is a thickness of the cell array 20 in the first direction X, which refers to a thickness in the first direction X at any moment when the cell array 20 is in normal use or not in use.

In the present disclosure, structure of the cell array 20 includes a structure and a material of the cell array 20 on a spatial position. As long as the structure design and/or material selection satisfies the formula 1, the cell array 20 of the present disclosure can be obtained.

In the first direction X, if a reserved space represented by $(1 - JR_w) + (SR_w - 1)$ is excessively small, the cell 10 will bear excessive constraint force during long-term cycling, and the electrolyte solution is squeezed out during charging, leading to insufficient electrolyte solution between the interfaces of the positive and negative electrode plates, so that lithium ions cannot be intercalated into the positive electrode to precipitate, resulting in rapid cycle decay. On the contrary, if a reserved space represented by $(1 - JR_w) + (SR_w - 1)$ is excessively large, the interface of the electrode plate of each of the plurality of cells 10 will become poor, and the energy density of each of the plurality of cells and the battery pack will be reduced.

In the present disclosure, $JR_w$ and $SR_w$ can be adjusted and controlled to allow the cell array 20 to satisfy the formula 1, which can control the expansion gap and improve the electrode plate interface and the electrode core performance.

In some embodiments, $P_w = JR_{thickness} - C_w$, where $JR_{thickness}$ is a thickness of the electrode core 201 inside each of the plurality of cells 10 in the first direction X at any moment. The thickness of the electrode core 201 at any moment may be a thickness of the electrode core 201 in the first direction at any moment before expansion, during expansion, or after expansion. In the formula 1, the thickness of the electrode core 201 inside each of the plurality of cells 10 in the first direction X at any moment is a thickness when each of the plurality of cells 10 satisfies the formula 1 whether it is expanded or not. If each of the plurality of cells 10 still satisfies the formula 1 when a thickness of the electrode core 201 expanded in the first direction X reaches an extreme value, the damage to the interface of the electrode plate caused by the expansion of each of the plurality of cells 10 can be avoided.

In some other embodiments, $P_w = X_{positive} \times Y_{positive} \times (1 + S_{positive}) + X_{negative} \times Y_{negative} \times (1 + S_{negative})$, where the electrode plate includes a positive electrode plate and a negative electrode plate spaced apart from each other, $X_{positive}$ is a number of layers of the positive electrode plate, $Y_{positive}$ is a thickness of the coating layer in a single layer of the positive electrode plate in the first direction X, $S_{positive}$ is an expansion coefficient of the coating layer in the positive electrode plate, $X_{negative}$ is a number of layers of the negative electrode plate, $Y_{negative}$ is a thickness of the coating layer in a single layer of the negative electrode plate in the first direction X, and $S_{negative}$ is an expansion coefficient of the coating layer in the negative electrode plate. In the representation manner in this embodiment, the thickness of the coating layer in the first direction at any moment is represented by the expansion thickness of the coating layer.

Gas is drawn out of the cell under negative pressure at the formation stage of the cell to prevent difficulty in lithium ion deintercalation and poor interface due to excessive gas. The external atmospheric pressure of the cell is greater than the internal pressure of the cell and the housing 100 is tightly attached to and fixes the electrode core 201 by the inward contraction force. During the cycle, the electrode core 201 bears the pressure from the recessed housing 100, the produced gas is continuous drawn out of the cell under the negative pressure, and at the same time, the cavity expands under the breathing effect of charging and discharging. The breathing effect of charging and discharging is reflected by the expansion coefficient S of the coating layer, which can be controlled by adjusting the material of positive and negative electrodes, the compaction density of positive and negative electrodes, the surface density of positive and negative electrodes, the rolling process (one-time rolling and double rolling), the rebound time of the electrode plate after rolling and before assembly, and the like. In addition, the requirements for the cycling capability of the cell at different temperatures are also considered. In some embodiments, when the cell is not fully charged in a factory state, $JR_w$ is less than or equal to 94%; and when the cell is fully charged in the factory state, $JR_w$ is less than or equal to 100%.

The cycle life of the battery core can be increased by controlling JR/SR. The housing 100 is recessed under negative pressure after gas is drawn out, with a recessed depth that ensures that the housing can be attached to the electrode core 201 in different charged states. The recessed housing, especially a recessed aluminum housing, can simplify the cell design. The large surface of the expanded cell can occupy the space of the recess, reducing the design of gap between two cells in the cell array, simplifying the structural design, controlling the expansion ratio on the basis of ensuring the interface of the electrode plate, and increasing the efficiency of assembly and production.

When the electrode core 201 is obtained by winding long electrode plates at intervals, one part of coating layer is in the first direction X, and the other part of coating layer is in a second direction Y. The part of coating layer in the second direction also has an expansion capability. Therefore, in some embodiments, the cell array 20 also satisfies the following formula 2:

$$88\% \le JR_L \le 92\% \text{ (formula 2)}.$$

$JR_L$ is an expansion space for the electrode core 201 inside each of the plurality of cells 10 in the second direction Y, and a width direction of each of the plurality of cells 10 is defined as the second direction Y. Specifically, referring to FIG. 2, the wound electrode core inside each of the plurality of cells 10 includes electrode plates stacked in the width direction, and the electrode core 201 has the expansion capability in the second direction Y based on the stacked electrode plates in the second direction Y.

It is to be noted that, the arrangement direction of the electrode core 201 in the cell may be different from the foregoing embodiments. For example, when the part of the side of the electrode core 201 with an arc-shaped region faces a short side of the cell, the corresponding size of each of the plurality of cells 10 in the first direction X satisfies the formula 1, and the corresponding size of each of the plurality of cells 10 in the second direction Y satisfies the formula 2; and when the part of the side of the electrode core 201 with the arc-shaped region faces a long side of the cell, the corresponding size of each of the plurality of cells 10 in the first direction X satisfies the formula 2, and the corresponding size of each of the plurality of cells 10 in the second direction Y satisfies the formula 1.

That is, when the part of the side of the electrode core 201 with the arc-shaped region faces the short side of the cell 10, the corresponding size of the cell 10 in the thickness direction satisfies the formula 1, and the corresponding size of the cell 10 in the width direction satisfies the formula 2; and when the part of the side of the electrode core 201 with the arc-shaped region faces the long side of the cell 10, the corresponding size of the cell 10 in the width direction satisfies the formula 1, and the corresponding size of the cell 10 in the thickness direction satisfies the formula 2. $JR_L = P_L/(Cell_L - K_L - C_L)$, where $P_L$ is a total width of all of the coating layers in the second direction Y at any moment, and the total width of the coating layers at any moment is a total width of the coating layers in the second direction Y at any moment before expansion, during expansion, or after expansion, $Cell_L$ is a width of each of the plurality of cells 10 before use, $K_L$ is a wall width of the housing 100 in the second direction Y, and $C_L$ is an incompressible width in the electrode core in the second direction Y. Similarly, the incompressible width in the electrode core 201 includes widths of a separator and a current collector in the electrode core 201; or the incompressible width in the electrode core 201 includes widths of a separator, a current collector, and an electrical insulation paper. In other embodiments, the incompressible width in the electrode core 201 also includes a width of a space occupied by compressed gas in the electrode core 201 in the second direction, which is the same as above.

The cell array 20 satisfies the formula 1 and formula 2 in the first direction X and the second direction Y respectively, which can better control the expansion gap and improve the electrode plate interface and the electrode core performance.

In some embodiments, $P_L = JR_{width} - C_L$, where $JR_{width}$ is a width of the electrode core 201 inside each of the plurality of cells 10 in the second direction Y at any moment, and the width of the electrode core 201 at any moment is a width of the electrode core 201 in the second direction Y at any moment before expansion, during expansion, or after expansion.

In some embodiments, $P_L = X_{positive} \times Y_{positive\text{-}second} \times (1 + S_{positive}) + X_{negative} \times Y_{negative\text{-}second} \times (1 + S_{negative})$, where the electrode plate includes a positive electrode plate and a negative electrode plate spaced apart from each other, $X_{positive}$ is a number of layers of the positive electrode plate, $Y_{positive\text{-}second}$ is a width of the coating layer in a single layer of the positive electrode plate in the second direction, $S_{positive}$ is an expansion coefficient of the coating layer in the positive electrode plate, $X_{negative}$ is a number of layers of the negative electrode plate, $Y_{negative\text{-}second}$ is a width of the coating layer in a single layer of the negative electrode plate in the second direction Y, and $S_{negative}$ is an expansion coefficient of the coating layer in the negative electrode plate.

Referring to FIG. 3, in some embodiments, a limiting structural member 300 is arranged between every two adjacent cells 10. In order to ensure the uniformity of the gaps between the cells 10 to improve the uniformity of the cycle performance between the cells 10 and avoid poor interface of the electrode plate of some cells 10 due to uneven stress to further affect the performance of the battery module and pack, in the present disclosure, the corresponding surface of the cell 10 in the first direction X is recessed inward, which can reduce the thickness of the limiting structural member between two adjacent cells 10, and save the amount of material used in the limiting structural member; and the recessed space is first occupied when the cell expands, ensuring the interface quality during the cycling. In the present disclosure, the limiting structural member 300 is a limiting frame.

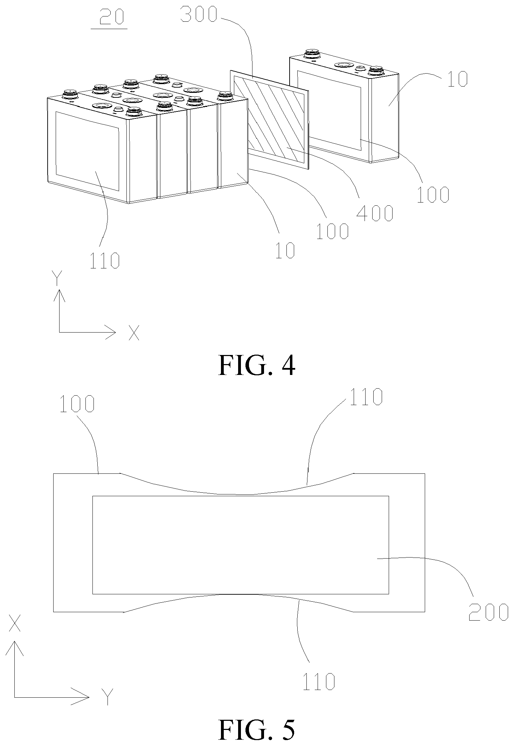

Referring to FIG. 4, in another embodiment, the limiting structural member 300 and a thermal insulation material 400 are arranged between the housings 100 of the two adjacent cells 10, and the thermal insulation material 400 is filled in the limiting structural member 300 or is filled between the limiting structure 300 and the housing 100 of the cell. The thermal insulation material 400 is also required to be arranged between the cells 10 to prevent the cells 10 from failing in an extreme environment to lead to thermal diffusion. When the limiting structural member 300 is a framework structure shown in FIG. 3, the thermal insulation material 400 is filled in a gap defined by surfaces of the limiting structural member 300 and the cell 10. When the limiting structural member 300 is a plate-shaped member, the thermal insulation material 400 is arranged between the cell 10 and the limiting structural member 300.

Referring to FIG. 5, in another embodiment, the housing 100 includes two opposing first surfaces in the first direction X, and at least one of the first surfaces is recessed toward inside of the housing 100 to form a recess 110.

In some embodiments, the two first surfaces are recessed toward the inside of the housing 100 to clamp the electrode core 201.

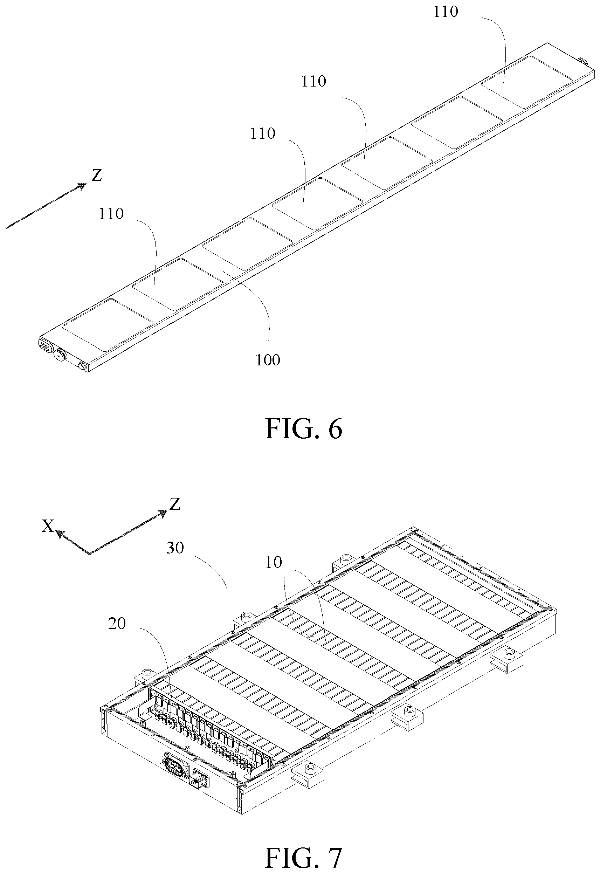

Referring to FIG. 5 and FIG. 6, in some embodiments, the cell includes a plurality of electrode cores 201, an electrode core group 200 includes a number of electrode cores 201, and each electrode core group 200 may include one or more electrode cores 201. When the electrode core group 200 includes a number of electrode cores 201, the number of electrode cores 201 are connected in parallel to form the electrode core group 200, or the number of electrode cores 201 are connected in series to form the electrode core group 200, or the number of electrode cores 201 are arranged in set. After the plurality of electrode cores 201 are connected in series in each set, the electrode cores 201 in each set are connected in parallel to form the electrode core group 200. A number of electrode core groups 200 are arranged along a third direction Z and are connected in series, and a length direction of the electrode core group 200 is consistent with the third direction Z. The first surface includes a number of recess 110, and a recess 110 is arranged corresponding to an electrode core group 200. In other embodiments, a number of recesses 110 are arranged on both the two opposing first surfaces, and the electrode core groups 200 are clamped by the recesses 110 at both sides.

Referring to FIG. 7, an embodiment of the present disclosure further provides a battery pack 30 including the cell array 20 in any one of the foregoing embodiments. The cell array 20 includes a plurality of cells 10. The plurality of cells 10 are arranged in sequence along a first direction X to form the cell array 20. That is, the plurality of cells 100 are arranged along a thickness direction of the cell to form the cell array.

There may be one or more cell arrays 20 and there may be one or more cells 10 in each cell array 20. In actual production, the quantity of the cell 10 may be set according to an actual need, and the quantity of the cell array 20 may also be set according to an actual need, which are not specifically limited in the present disclosure.

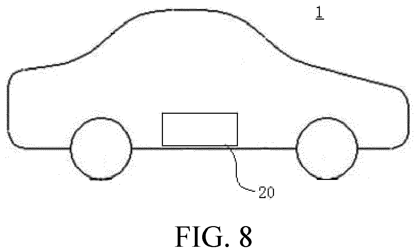

As shown in FIG. 8, the present disclosure further provides a vehicle 1, including the foregoing battery pack 30.

Although the embodiments of the present disclosure have been shown and described, a person of ordinary skill in the art may understand that various changes, modifications, replacements, and variations may be made to the embodiments without departing from the principles and spirit of the present disclosure, and the scope of the present disclosure is as defined by the appended claims and their equivalents.

**Claims**

1. A cell array, comprising a plurality of cells arranged in sequence, wherein each of the plurality of cells comprises a housing and an electrode core arranged in the housing, the electrode core comprises an electrode plate, and the electrode plate comprises a current collector and a coating layer arranged on the current collector; and the cell array satisfies the following formula 1:

$$(1 - JR_w) + (SR_w - 1) = 10\%\text{-}15\% \text{ (formula 1)},$$

wherein $JR_w$ is an expansion space for the electrode core inside each of the plurality of cells in a first direction, $SR_w$ is an expansion space outside the plurality of cells in the first direction, and a thickness direction of each of the plurality of cells is defined as the first direction;
$JR_w = P_w/(Cell_w - K_w - C_w)$, wherein $P_w$ is a total thickness of all of coating layers in the first direction at any moment, and the total thickness of the coating layers at any moment is a total thickness of the coating layers in the first direction at any moment before expansion, during expansion, or after expansion, $Cell_w$ is a thickness of each of the plurality of cells in the first direction before use, $K_w$ is a wall thickness of the housing in the first direction, and $C_w$ is an incompressible thickness in the electrode core in the first direction; and
$SR_w = (M_w - MN_w)/(Cell_n \times Cell_w)$, wherein $M_w$ is a thickness of the cell array in the first direction, $MN_w$ is an incompressible thickness in the cell array in the first direction, and $Cell_n$ is a number of the cells.

2. The cell array according to claim 1, wherein $P_w = JR_{thickness} - C_w$, wherein $JR_{thickness}$ is a thickness of the electrode core inside each of the plurality of cells in the first direction at any moment, and the thickness of the electrode core at any moment is a thickness of the electrode core in the first direction at any moment before expansion, during expansion, or after expansion.

3. The cell array according to claim 1 or 2, wherein $P_w = X_{positive} \times Y_{positive} \times (1 + S_{positive}) + X_{negative} \times Y_{negative} \times (1 + S_{negative})$, wherein the electrode plate comprises a positive electrode plate and a negative electrode plate spaced apart from each other, $X_{positive}$ is a number of layers of the positive electrode plate, $Y_{positive}$ is a thickness of the coating layer in a single layer of the positive electrode plate in the first direction, $S_{positive}$ is an expansion coefficient of the coating layer in the positive electrode plate, $X_{negative}$ is a number of layers of the negative electrode plate, $Y_{negative}$ is a thickness of the coating layer in a single layer of the negative electrode plate in the first direction, and $S_{negative}$ is an expansion coefficient of the coating layer in the negative electrode plate.

4. The cell array according to any one of claims 1 to 3, wherein the coating layer comprises an active material, and the coating layer is expandable or contractible during charging and discharging of the cell.

5. The cell array according to any one of claims 1 to 4, wherein the incompressible thickness in the electrode core comprises a thickness of a separator, a current collector, or an electrical insulation paper in the electrode core.

6. The cell array according to any one of claims 1 to 5, wherein an outer case is arranged outside the cell array and comprises end plates at two sides in the first direction; an incompressible thermal insulation cotton is further provided between the outer case and the cell array; and the incompressible thickness in the cell array comprises thicknesses of the end plates and the incompressible thermal insulation cotton.

7. The cell array according to any one of claims 1 to 6, wherein when each of the plurality of cells is not fully charged in a factory state, $JR_w$ is less than or equal to 94%; and when each of the plurality of cells is fully charged in the factory state, $JR_w$ is less than or equal to 100%.

8. The cell array according to any one of claims 1 to 7, wherein the structure of the cell array further satisfies the following formula 2:

$$88\% \le JR_L \le 92\% \text{ (formula 2),}$$

wherein $JR_L$ is an expansion space for the electrode core inside each of the plurality of cells in a second direction, and a width direction of each of the plurality of cells is defined as the second direction;

$JR_L = P_L/(Cell_L - K_L - C_L)$, wherein $P_L$ is a total width of all of the coating layers in the second direction at any moment, and the total width of the coating layers at any moment is a total width of the coating layers in the second direction at any moment before expansion, during expansion, or after expansion, $Cell_L$ is a width of each of the plurality of cells in the second direction before use, $K_L$ is a wall width of the housing in the second direction, and $C_L$ is an incompressible width in the electrode core in the second direction.

9. The cell array according to claim 8, wherein $P_L = JR_{width} - C_L$, wherein $JR_{width}$ is a width of the electrode core inside each of the plurality of cells in the second direction at any moment, and the width of the electrode core at any moment is a width of the electrode core in the second direction at any moment before expansion, during expansion, or after expansion.

10. The cell array according to claim 8, wherein $P_L = X_{positive} \times Y_{positive-second} \times (1 + S_{positive}) + X_{negative} \times Y_{negative-second} \times (1 + S_{negative})$, wherein the electrode plate comprises a positive electrode plate and a negative electrode plate spaced apart from each other, $X_{positive}$ is a number of layers of the positive electrode plate, $Y_{positive-second}$ is a width of the coating layer in a single layer of the positive electrode plate in the second direction, $S_{positive}$ is an expansion coefficient of the coating layer in the positive electrode plate, $X_{negative}$ is a number of layers of the negative electrode plate, $Y_{negative-second}$ is a width of the coating layer in a single layer of the negative electrode plate in the second direction, and $S_{negative}$ is an expansion coefficient of the coating layer in the negative electrode plate.

11. The cell array according to any one of claims 1 to 10, wherein a limiting structural member is arranged between every two adjacent cells.

12. The cell array according to any one of claims 1 to 11, wherein the limiting structural member and a thermal insulation material are arranged between housings of the two adjacent cells, and the thermal insulation material is filled in the limiting structural member or is filled between the limiting structural member and the housing.

13. The cell array according to any one of claims 1 to 12, wherein the housing comprises two opposing first surfaces in the first direction, and at least one of the first surfaces is recessed toward inside of the housing to form a recess.

14. The cell array according to claim 13, wherein the two first surfaces are recessed toward the inside of the housing to clamp the electrode core.

15. A battery pack, comprising a plurality of cell arrays according to any one of claims 1 to 14.

16. A vehicle, comprising the battery pack according to claim 15.

FIG. 1

FIG. 2

FIG. 3

FIG. 4

FIG. 5

FIG. 6

FIG. 7

FIG. 8

## INTERNATIONAL SEARCH REPORT

International application No.

**PCT/CN2021/075786**

**A. CLASSIFICATION OF SUBJECT MATTER**

H01M 50/207(2021.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI: 电池, 序列, 极片, 膨胀, 厚度, 压缩, battery, serial, electrode sheet, expand, thickness, compress

**C. DOCUMENTS CONSIDERED TO BE RELEVANT**

| Category* | Citation of document, with indication, where appropriate, of the relevant passages | Relevant to claim No. |
|---|---|---|
| A | CN 110265591 A (CONTEMPORARY AMPEREX TECHNOLOGY LTD.) 20 September 2019 (2019-09-20) <br> description, paragraphs 17-31, 79-89, figures 1-2 | 1-16 |
| A | CN 209880740 U (CONTEMPORARY AMPEREX TECHNOLOGY LTD.) 31 December 2019 (2019-12-31) <br> description, paragraphs 3-71, and figures 1-5 | 1-16 |
| A | CN 209401784 U (QINGHAI CONTEMPORARY AMPEREX TECHNOLOGY LTD.) 17 September 2019 (2019-09-17) <br> entire document | 1-16 |
| A | CN 110190221 A (CONTEMPORARY AMPEREX TECHNOLOGY LTD.) 30 August 2019 (2019-08-30) <br> entire document | 1-16 |
| A | CN 208819967 U (CONTEMPORARY AMPEREX TECHNOLOGY LTD.) 03 May 2019 (2019-05-03) <br> entire document | 1-16 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 April 2021** | **08 May 2021** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/075786** |

**C.**     **DOCUMENTS CONSIDERED TO BE RELEVANT**

| Category* | Citation of document, with indication, where appropriate, of the relevant passages | Relevant to claim No. |
| --- | --- | --- |
| A | CN 208240790 U (SHENZHEN BYD LITHIUM BATTERY CO., LTD.) 14 December 2018 (2018-12-14)<br>    entire document | 1-16 |
| A | JP 2020013752 A (TOYOTA INDUSTRIES CORP.) 23 January 2020 (2020-01-23)<br>    entire document | 1-16 |

Form PCT/ISA/210 (second sheet) (January 2015)

**INTERNATIONAL SEARCH REPORT**
Information on patent family members

International application No.

**PCT/CN2021/075786**

| Patent document cited in search report | | | Publication date (day/month/year) | Patent family member(s) | | | Publication date (day/month/year) |
|---|---|---|---|---|---|---|---|
| CN | 110265591 | A | 20 September 2019 | WO | 2020042411 | A1 | 05 March 2020 |
| | | | | EP | 3641006 | A1 | 22 April 2020 |
| | | | | CN | 110265591 | B | 24 January 2020 |
| CN | 209880740 | U | 31 December 2019 | None | | | |
| CN | 209401784 | U | 17 September 2019 | WO | 2020177599 | A1 | 10 September 2020 |
| | | | | CN | 110190340 | A | 30 August 2019 |
| | | | | US | 20200280043 | A1 | 03 September 2020 |
| | | | | EP | 3703148 | A1 | 02 September 2020 |
| CN | 110190221 | A | 30 August 2019 | CN | 110190221 | B | 04 September 2020 |
| | | | | EP | 3739657 | A1 | 18 November 2020 |
| | | | | WO | 2020228485 | A1 | 19 November 2020 |
| | | | | US | 2020365847 | A1 | 19 November 2020 |
| | | | | IN | 202017047445 | A | 04 December 2020 |
| CN | 208819967 | U | 03 May 2019 | WO | 2020052590 | A1 | 19 March 2020 |
| | | | | EP | 3780153 | A1 | 17 February 2021 |
| CN | 208240790 | U | 14 December 2018 | None | | | |
| JP | 2020013752 | A | 23 January 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010108866X